# EUROPEAN PATENT APPLICATION

(11) **EP 3 461 573 A1**
(43) Date of publication of application: **03.04.2019**
(21) Application number: 18188625.0
(22) Date of filing: 13.08.2018
(51) Int. Cl.: B22F 3/105, C22C 32/00, C22C 33/02, B33Y 70/00, B33Y 10/00, B33Y 80/00

(54) **FABRICATION OF MODIFIED ALLOYS USING LOW MELTING TEMPERATURE BORIDE COMPOUNDS FOR ADDITIVE MANUFACTURING**

(30) Priority: 02.10.2017 US 201715722294
(71) Applicant: The Boeing Company, Chicago, IL 60606-1596 (US)
(72) Inventor: BOCCHINI, Peter J., Chicago, IL Illinois 60606-1596 (US); SENDEROS, Bruno Zamorano, Chicago, IL Illinois 60606-1596 (US)
(74) Representative: Duxbury, Stephen

(57) **Abstract**

Provided is a method for making a modified alloy. The method includes: providing at least one base alloy; providing at least one boride compound represented by the formula, MₓB_{y}; forming a melt pool comprising the base alloy and the at least one boride compound, and solidifying at least a portion of the melt pool. In the formula, M is a non-boron element, B is boron, x = 1 or 2, and y = 1 or 2.

## Description

### Technical Field

The present disclosure relates generally to metallic materials and, more particularly, to the production of performance enhanced metallic materials, such as modified alloys including, but not limited to, metal matrix composites, and methods for fabricating modified alloys.

### Background

Additive manufacturing is utilized to fabricate 3-dimensional (3D) parts or products by adding layer-upon-layer of material. Additive manufacturing systems utilize 3D-modeling (Computer-Aided Design or CAD) software, computer-controlled additive-manufacturing equipment, and raw materials (feed stocks) in powder, wire or liquid form. Additive manufacturing encompasses a wide variety of technologies and incorporates a wide variety of techniques, such as, for example, laser freeform manufacturing (LFM), laser deposition (LD), direct metal deposition (DMD), laser metal deposition, laser additive manufacturing, laser engineered net shaping (LENS), stereolithography (SLA), selective laser sintering (SLS), fused deposition modeling (FDM), multi-jet modeling (MJM), 3D printing, rapid prototyping, direct digital manufacturing, layered manufacturing, and additive fabrication. Moreover, a variety of raw materials may be used in additive manufacturing to create products. Examples of such materials include plastics, metals, concrete, and glass.

One example of an additive-manufacturing system is a laser additive-manufacturing system. Laser additive manufacturing includes spraying or otherwise injecting a powder or a liquid into a focused beam of a high-power laser or nexus of a plurality of high-powered lasers under controlled atmospheric conditions, thereby creating a weld pool. The resulting deposits may then be used to build or rework articles for a wide variety of applications.

Some modified metal alloy materials such as metal matrix composites have traditionally been processed utilizing powder metallurgy techniques. However, these techniques require pressing and sintering which are difficult and time consuming. Additive manufacturing is a process reliant on solidification dynamics similarly to welds and castings, enables easier manufacturing of parts than traditional metallurgy, and does not require pressing and sintering. Accordingly, processing improvements in the fabrication of modified alloys, such as metal matrix composites, using additive manufacturing would be a welcome addition to the art.

### Summary

In a first aspect, a method for making a modified alloy is provided , comprising: providing at least one base alloy; providing at least one boride compound represented by the formula, MₓB_{y}, forming a melt pool comprising the base alloy and at least one boride compound, and solidifying at least a portion of the melt pool. In the formula, MₓB_{y}, M is a non-boron element, B is boron, x = 1 or 2, and y = 1, 2, 3, 4, 5, or 6.

In another aspect, there is provided an article comprising a modified alloy, wherein the modified alloy is formed according to a method for making a modified alloy, the method comprising providing a base alloy; providing at least one boride compound represented by the formula, MₓB_{y}, forming a melt pool comprising the base alloy and the at least one boride compound, and solidifying at least a portion of the melt pool. In the formula, MₓB_{y}, M is a non-boron element, B is boron, x = 1 or 2, and y = 1, 2, 3, 4, 5, or 6.

In a further aspect there is provided a powder for use in additive manufacturing, comprising: base alloy particles and up to about 20 % by weight of boride compound particles, wherein the boride compound is represented by the formula, MxBy, wherein M is a non-boron element, B is boron, x =1 or 2 and y = 1, 2, 3, 4, 5, or 6.

Advantages will be set forth in part in the description which follows, and in part will be understood from the description, or may be learned by practice. The advantages will be realized and attained by means of the elements and combinations particularly pointed out in the appended claims.

It is to be understood that both the foregoing general description and the following detailed description are exemplary and explanatory only and are not restrictive of the examples, as claimed.

### Brief Description of the Drawings

The accompanying drawings, which are incorporated in and constitute a part of this specification, illustrate the present teachings and together with the description, serve to explain the principles of the disclosure.
**FIG. 1A** is flow chart representation of a method according to the present invention in which at least one boride compound and at least one base alloy are provided as separate feedstock to an additive manufacturing system for forming a modified alloy, such as a metal matrix composite.
**FIG. 1B** is flow chart representation of a method according to the present invention in which at least one boride compound and at least one base alloy are provided separately and are mixed together to form a mixed powder feedstock which may be provided to an additive manufacturing system for forming a modified alloy, such as a metal matrix composite.
**FIG. 1C** is flow chart representation of a method according to the present invention in which a modified alloy, for example, a modified alloy formed according to the methods depicted in FIGS. 1A or 1B, is provided for use as feedstock for an additive manufacturing system.
**FIG. 2** is a schematic representation of an additive manufacturing system which may be used to perform the methods described by the flow-chart representations of FIGS. 1A-1C.
**FIG. 3A** is a flow diagram of aircraft production and service methodology, according to an example.
**FIG. 3B** is a block diagram of an aircraft..
**FIG. 3C** is a schematic illustration of an aircraft that includes a structure that may be formed, assembled or joined via an additive manufacturing method or from materials including modified alloy (e.g., metal matrix composite) formed by additive manufacturing as described herein.

### Detailed Description

Reference will now be made in detail to the present examples, examples of which are illustrated in the accompanying drawings. Wherever possible, the same reference numbers will be used throughout the drawings to refer to the same or like parts.

Notwithstanding that the numerical ranges and parameters setting forth the broad scope of the examples are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein. For example, a range of "less than 10" may include any and all sub-ranges between (and including) the minimum value of zero and the maximum value of 10, that is, any and all sub-ranges having a minimum value of equal to or greater than zero and a maximum value of equal to or less than 10, e.g., 1 to 5. In certain cases, the numerical values as stated for the parameter may take on negative values. In this case, the example value of range stated as "less than 10" may assume negative values, e.g. -1, -2, -3, - 10, -20, -30, etc.

The following examples are described for illustrative purposes only with reference to the Figures. Those of skill in the art will appreciate that the following description is exemplary in nature, and that various modifications to the parameters set forth herein could be made without departing from the scope of the present examples. It is intended that the specification and examples be considered as exemplary only. The various examples are not necessarily mutually exclusive, as some examples may be combined with one or more other examples to form new examples. It will be understood that the structures depicted in the figures may include additional features not depicted for simplicity, while depicted structures may be removed or modified.

While not limited to any particular example, modified alloys as described herein include those in which at least one base metal alloy is combined with at least one boride compound, for example, via an additive manufacturing process, such that boron is incorporated into the base metal. In an example, such modified alloy may be formed by an additive manufacturing process in which the at least one base metal alloy and the at least one boride compound are combined in a melt pool. Examples of modified alloys formed according to methods described herein include, but are not limited to, metal matrix composites, grain-refined alloys, solution hardened alloys and other alloys in which incorporation of boron into the base alloy modifies the microstructure of the base alloy. Accordingly, while some examples presented herein describe fabrication of metal matrix composites as the modified alloy, and/or describe the use of metal matrix composites as raw material for forming articles comprising modified alloy, such as via additive manufacturing, other examples need not be so limited and methods described herein may be applied for forming other modified alloys, for example, via additive manufacturing, and/or using other modified alloys, for example, as raw material feedstock in additive manufacturing methods.

Metal matrix composites are of interest due to their combination of high strength, stiffness and toughness as well as having good fatigue and wear resistance properties. Some metal matrix composites may be utilized for forming a structural component which can be incorporated in a larger structure such as a land-based vehicle, an aircraft, a space vehicle or waterborne vehicle. As described above many conventional powder metallurgy fabrication methods are inefficient and time consuming. Thus, additive manufacturing, which does not require additional processing steps like sintering and pressing, is an attractive option for forming metal matrix composites from base alloys and metal-containing-compounds as raw materials, particularly in their powder forms. However, some combinations of base alloy materials and alloy compounds that are used as raw material in forming modified alloy, such as metal matrix compounds, are not suitable for use together in additive manufacturing processes due to differences in physical properties such as significant differences in their respective melting temperatures, such as differences in the respective melting temperatures of constituent elements of each.

For example, Ti-TiB metal matrix composites may traditionally be formed by powder metallurgy fabrication, including mixing and subsequently sintering to react a titanium base alloy (such as Ti-6Al-4V powder) with a boron-containing compound (such as boron powder, or TiB₂ powder which is one of the least expensive boride compounds), or by sintering a prealloyed powder. However, large differences in melting temperature between particular titanium base alloys and some boron-containing materials (e.g., titanium alloys have much lower melting temperatures than TiB₂) makes direct use of some boron-containing materials in additive manufacturing difficult. The difficulty lies, in part, in setting optimal melting parameters that, if not properly selected, could lead to incomplete melting of the boron-containing materials during fabrication. Current techniques, therefore, do not suitably facilitate the fabrication of some modified alloys, such as metal matrix composites and, therefore, the use of functionally graded materials is limited.

As described herein, selection of appropriate metal derivatives, for example, appropriate boride compounds having melting temperatures that approach the melting temperature of the base alloy, allows for improved introduction of the metal into the base alloy and the forming of the modified alloy (e.g., metal matrix composite) by additive manufacturing. Thus, the use of select boride compounds with select base alloys that have similar melting temperatures, or melting temperatures within an acceptable range, allows for the introduction of boron in a manner that is adapted for usability in additive manufacturing processes, for example, as used in manufacturing and service methods of manned or unmanned vehicles, including aircraft.

Generally, aspects of the present disclosure include fabrication of modified alloys, such as metal matrix composites, by additive manufacturing and use of modified alloys, such as metal matrix composites, as feedstock for additive manufacturing systems. Accordingly, metal modified alloy, such as matrix composites, may be formed according to the method described herein. For example, described herein are methods for fabricating a modified alloy, such as a metal matrix composite, via additive manufacturing from a feedstock that comprises at least one boride compound and at least one base alloy.

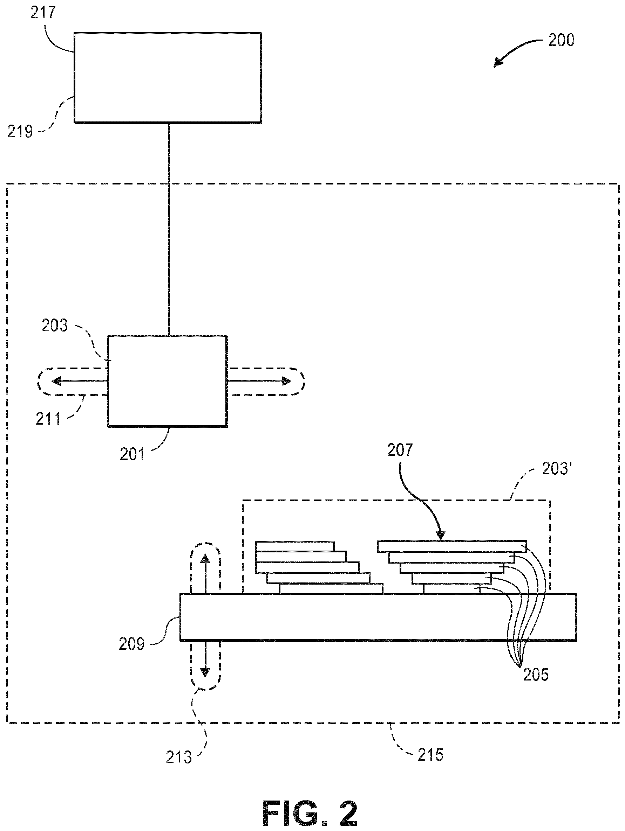

The fabrication of a modified alloy, such as a metal matrix composite, may be performed *in situ* during an additive manufacturing process. A melt pool comprising feedstock raw materials (e.g., at least one base alloy and at least one boride compound) may be formed contemporaneously with the depositing of at least a portion of the melt pool, for example, in a predetermined pattern. The selected raw materials may comprise melting point temperatures that fall within an acceptable range so that they each melt to form the melt pool. For example, a modified alloy, such as a metal matrix composite, may be formed via a method executed by an additive manufacturing system such as additive manufacturing system 200 of FIG. 2. As raw materials, at least one boride compound and at least one base alloy are selected. The at least one boride compound preferably comprises a melting temperature that is within a range of about +/- 900 °C of the melting temperature of the at least one base alloy, for example, within a range of about +/- 600°C of the melting temperature of the at least one base alloy, including within a range of about +/- 300°C of the melting temperature of the at least one base alloy. As the melt pool solidifies, a modified alloy, such as metal matrix composite, forms. The resulting modified alloy may have different physical and/or mechanical properties as compared to either the base alloy alone and/or the boride compound alone. The modified alloy formed according to methods described herein can itself be used as raw material feedstock in the same or different additive manufacturing system. For example, the modified alloy, such as a metal matrix composite, can be formed as an ingot that can be processed into a form usable for additive manufacturing (e.g., it may be gas-atomized to form a modified alloy powder). An article or a weld-like joint between surfaces comprising the modified alloy may be formed via additive manufacturing. For example, an article comprising functionally graded materials comprising modified alloy (i.e., the modified alloy may comprise a functionally graded modified alloy, such as a functionally graded metal matrix composites) can be formed. Such articles may be utilized as a component of an air, land, sea or space vehicle, or as.

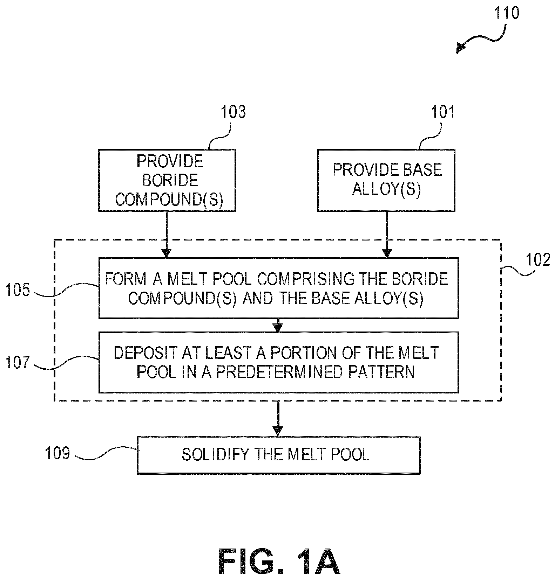

A method for the *in-situ* fabrication of a modified alloy, such as a metal matrix composite, is depicted in the flow-chart 100 of FIG. 1A. As shown in the flow-chart 100, the method can include providing at least one base alloy at 101; providing at least one boride compound at 103; forming a melt pool comprising the at least base alloy and the at least one boride compound at 105; depositing at least a portion of the melt pool, for example, in a predetermined pattern at 107; and solidifying the melt pool at 109. Here, the at least one boride compound provided at 103 and the at least one base alloy provided at 101 can be separately introduced to an additive manufacturing system for processing, such as additive manufacturing system 200 of FIG. 2. The at least one boride compound, the at least one base alloy or both can be provided as separate feedstock in the form of a powder, wire, or liquid.

The additive manufacturing system 200 can be configured to combine the at least one boride compound and the at least one base alloy, for example, in at least one pre-set proportion which may remain static or may change during the fabrication of the modified alloy. That is, the pre-set proportion need not remain static during the forming of the modified alloy and a plurality of pre-set proportions may be used. For example, the amount (e.g., by weight %) of the at least one boride compound relative to the amount of the at least one base alloy may stay the same or may vary during additive manufacturing of the modified alloy. By keeping the proportion of the provided amount of at least one boride compound to the provided amount of the at least one base alloy static, a modified alloy, such as a metal matrix composite, comprising a substantially uniform amount of boride throughout can be formed. By varying the proportion of the provided amount of the at least one boride to the provided amount of the at least one base alloy, a modified alloy-such as a metal matrix composite-comprising at least a portion having a nonuniform amount of boride throughout can be formed. Accordingly, a functionally graded article comprising varying amounts of boron throughout can be formed by varying the provided amount of boride relative to the provided amount of base alloy. In other words, as the provided amount of boride compound relative to the provided amount of base alloy is changed, the relative amount of boride to base alloy in the melt pool will vary, and the amount of boride in deposited portions of the melt pool may also vary.

, The boride compound and base alloy can be provided as separate powder feedstocks that are combined by the additive manufacturing system to form a mixed feedstock comprising less than or equal to about 20% by weight of boride compound. The additive manufacturing system melts the boride compound and the base alloy and forms a melt pool comprising boride compound and base alloy. The additive manufacturing system deposits at least a portion of the melt pool in a predetermined pattern as part of an additive manufacturing process 102.

For example, the additive manufacturing system can expose the combined boride compound and base alloy feedstocks to an energy source. The energy provided by the energy source causes the base alloy and the boride compound to melt to form a modified alloy melt pool comprising the at least boride compound and the at least one base alloy at 105. At least some of the boride compound(s) combined with the base alloy(s) can dissolve in the melt pool at 105. For example, while not limited to any particular theory, in some instances-depending on the base metal of the base alloy-boron that can be provided from the boride compound dissolves into the matrix as solid solution (leading to increased ductility of the resulting modified alloy). The melt pool can then be deposited in a predetermined pattern at 107 via, for example, additive manufacturing. The additive manufacturing system can deposit the melt pool in a predetermined pattern, layer-by-layer, to form a 3-Dimensional (3D) article, between surfaces to form a weld-like joint, or as an ingot, although such shapes, forms and uses are not limiting. While in the melt pool, the at least one boride compound and the at least one base alloy react with one another. While not limited to any particular theory, it is believed that depending on the boride compound and the base metal of the base alloy, the boride will dissolve and precipitate at grain boundaries to strengthen the resulting grain boundaries in the formed modified alloy. For example, as the deposited melt pool cools, at least some of the borides from the at least one boride compound may precipitate out of solution, for example, within or across grain boundaries, as the modified alloy solidifies. Such, borides formed within or across grain boundaries can perform as grain boundary pinning sites resulting in a finer microstructure and/or as mechanical reinforcement to the base metal alloy in the modified alloy.

While the method of flow-chart 100 shows that the at least one boride compound and the at least one base alloy are separately provided to an additive manufacturing system, for example, as separate feedstocks, other implementations are not so limited. Accordingly, the boride compound(s) and the base alloy(s) can be provided to an additive manufacturing system as a pre-mixed feedstock.

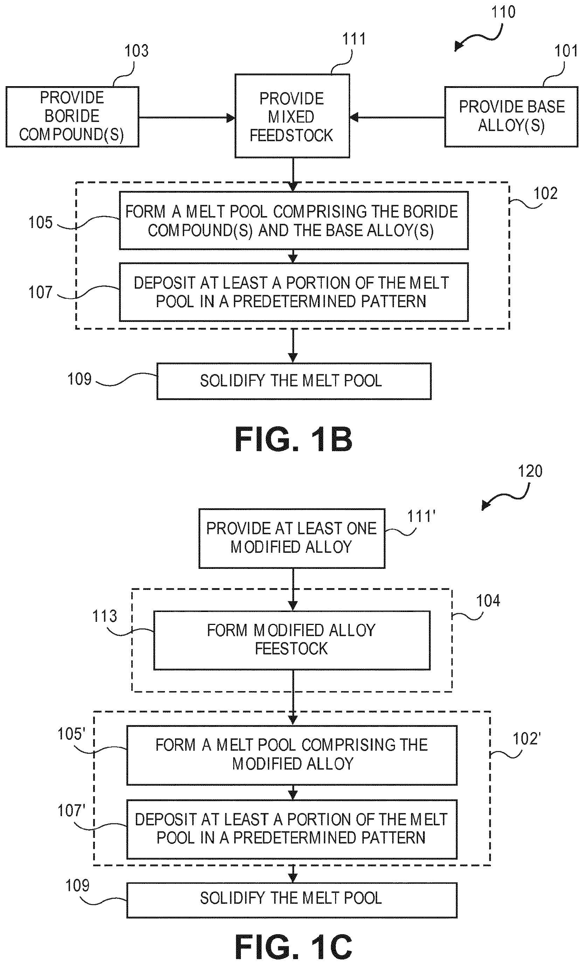

For example, a method for *in situ* fabrication of a modified alloy, such as a metal matrix composite, depicted in the flow-chart 110 of FIG. 1B includes providing at least one base alloy at 101; providing at least one boride compound at 103; providing a mixed feedstock at 111; forming a melt pool comprising the at least one base alloy and the at least one boride compound at 105; depositing at least a portion of the melt pool, for example, in a predetermined pattern at 107; and solidifying the melt pool at 109. Here, the mixed feed stock can be formed by combining the at least one base alloy provided at 101 and the at least one boride compound provided at 103.

The at least one boride compound, the at least one base alloy or both can be provided in the form of a powder, wire, or liquid. The combining of the at least one base alloy provided at 101 and the at least one boride compound provided at 103 may comprise a physical mixing of the powders, the forming of a pre-alloyed powder comprising the base alloy and the boride compound, or simply providing a pre-formed pre-alloyed powder comprising the base alloy and the boride compound.

The at least one boride compound can be provided as a powder and can be combined with the at least one base alloy that is also provided as a powder to form a mixed powder feedstock (i.e., a powder mixture). The at least one boride compound can be provided as a powder and can be combined with an ingot comprising the at least one base alloy. The at least one boride compound in powder form and the at least on base alloy in ingot form can be ground together, for example, to form the mixed powder feedstock. This pre-mixed feed stock can be introduced to an additive manufacturing system for processing.

The boride composite(s) and base alloy(s) can be available as separate powder feedstocks that may be combined into a mixed powder feedstock prior to being introduced to an additive manufacturing system. The mixed feedstock can, therefore, comprise a powder for use in additive manufacturing comprising base alloy particles and up to about 20% by weight of boride compound particles, wherein the boride compound of the boride compound particles are represented by Formula I:

MxBy (I),

wherein M is a non-boron element such as Al, Co, Cr, Fe, La, Mo, Nb, Ni, or W, wherein B is boron, wherein x = 1 or 2, and wherein y = 1, 2, 3, 4, 5, or 6. For example, the boride compound of the boride compound particles can comprise one or more of Fe₂B, AlB₂, CrB₂, and mixtures thereof and/or the the base alloy of the base alloy particles can comprise one or more of an aluminum-based alloy, iron-based alloy, nickel-based alloy, cobalt-based alloy, titanium-based alloy, or combinations thereof. The boride compound of the boride compound particles can comprise a melting temperature that is within a range of about 900°C of the melting temperature of the base alloy of the base alloy particles, for example, the boride compound can comprise a melting temperature that is lower than a melting temperature of TiB₂.

As part of an additive manufacturing process 102 as described above, the powder for use in additive manufacturing (i.e., the mixed powder feedstock) can be melted to form a melt pool and at least a portion of the melt pool may contemporaneously be deposited in a predetermined pattern followed by forming of the modified alloy. That is, the modified alloy can be formed *in situ* via the additive manufacturing process 102 as described above.

As described above, many combinations of base alloy(s) and metal-containing compound(s) are not available for use together in additive manufacturing due to, among other reasons, differences in their melting temperatures. Accordingly, the methods described herein may be used for fabricating a modified alloy, such as a metal matrix composite, via additive manufacturing from at least one boride compound and at least one base alloy.

For example, a modified alloy fabricated via additive manufacturing from at least one boride compound and at least one base alloy as feedstock may itself be used as a feedstock for forming 3D articles or weld-like joints between surfaces via additive manufacturing. A modified alloy formed according to the methods depicted in flow-charts 100 and 110 of FIGS. 1A and 1B, respectively, may itself be used as a modified alloy feedstock for an additive manufacturing process. In such a method for additive manufacturing using a modified alloy as feedstock, as illustrated in the flow-chart 120 of FIG. 1C, at least one modified alloy is provided at 111', wherein the at least one modified alloy was fabricated via additive manufacturing from at least one base alloy and at least one boride compound. The method continues by optionally forming a modified alloy feedstock at 113', forming a melt pool comprising the at least one modified alloy at 105', depositing at least a portion of the melt pool, for example, in a predetermined pattern at 107', and solidifying the melt pool at 109'.

The modified alloy provided at 111' can be provided as an ingot of the material; i.e., a modified alloy ingot. The modified alloy ingot can be subject to an optional processing at 104 in an appropriate system to form the modified alloy feedstock at 113' prior to being introduced to an additive manufacturing system. For example, an ingot comprising the modified alloy provided at 111' may be subject to processing by a gas atomizer into the form of a powder. However, an additive manufacturing system may require the feedstock to be processed into another form appropriate to the needs of the additive manufacturing system of choice.

Similar to the methods depicted in flow-charts 100 and 110 of FIGS. 1A and 1B, respectively, an additive manufacturing system that executes the method depicted in flow-chart 120 exposes the feedstock material-here the modified alloy-to an energy source that melts the feedstock (modified alloy) to form the melt pool comprising the modified alloy at 105'. The melt pool is then deposited in a predetermined pattern at 107' via the additive manufacturing process 102'. As the deposited melt cools, it re-solidifies into a second modified alloy at 109'. The second modified alloy formed at 109' can have the same microstructure as that of the modified alloy provided as feedstock at 111'. In an example, the as-deposited modified alloy at 107' may solidify into a second modified alloy that has a different microstructure than that of the modified alloy provided as feedstock at 111', but can be exposed to post-process heat treatment(s) in order to further modify the modified alloy to have a substantially similar microstructure as that of the feedstock modified alloy. The cooling rate at which the as-deposited melt pool formed at 107' can be exposed to in order to solidify as the second modified alloy can be the same or different than the cooling rate at which the modified alloy provided at 111' was solidified when it was formed from at least one base alloy and at least one boride compound via additive manufacturing. In an example, additional amount of the at least one boride compound and/or the at least one base alloy may be added to the modified alloy feedstock. For example, the modified alloy feedstock can be processed into a powder to which additional base alloy(s) and/or boride compound(s) such as in powder form are added.

Additive manufacturing can be performed by powder bed, powder fed, wire fed, and binder jet systems. Additive manufacturing methods can include laser freeform manufacturing (LFM), directed energy deposition, laser cladding, laser deposition (LD), direct metal deposition (DMD), laser metal deposition (LMD) including laser melting deposition-powder (LMD-p) and laser melting deposition-wire (LMD-w), laser additive manufacturing, laser engineered net shaping (LENS), stereolithography (SLA), selective laser sintering (SLS), selective layer melting (SLM), fused deposition modeling (FDM), electron beam melting (EBM), Laser Powder Bed Fusion (L-PBF), and binder jet printing.

Turning now to FIG. 2, illustrative, a non-exclusive example of an additive manufacturing system 200 is schematically presented, with the system 200 optionally being configured to perform and/or facilitate the methods according to flow-charts 100, 110, 120 according to the present disclosure. System 200 generally comprises an additive manufacturing machine with a deposition device 201. The deposition device 201 optionally includes a stock material supply 203 (e.g., such as for a powder fed or a wire fed system). A stock material supply 203 provides raw material (e.g., the at least one base alloy and the at least one boride compound) to an additive-manufacturing head of the deposition device. For example, the material is ejected from one or more material outputs provided in the additive-manufacturing head. The one or more material outputs may comprise a variety of configurations such as, for example, apertures, nozzles, etc. The one or more material outputs of the manufacturing head may be comprised of an aperture aligned with the nexus or convergence of the one or more of laser outputs. Accordingly, , the at least one boride compound and/or the at least one base alloy may be provided to a powder fed system. The base tray 209 may optionally carry a stock material supply 203' (e.g., such as for a powder bed system). Accordingly, the at least one boride compound and/or the at least one base alloy can be provided to a powder bed system.

The forming of the melt pool according to the methods described herein preferably comprises exposing at least a portion of the base alloy(s) and at least a portion of the boride compound(s) to a beam of focused energy. Examples of focused energy include electron beam, laser beam, and thermal radiation. For example, a laser source generates a laser beam and transmits it to one or more laser outputs of an additive-manufacturing head for emission. The laser beam, emitted from the one or more laser outputs, is concentrated into a nexus or convergence. Accordingly, the deposition device 201 may include an energy source (not shown) for emitting to the feedstock provided by the material supply. The deposition device 201 provides a focused beam of energy from the energy source to form a melt pool from the feedstock provided by the stock material supply 203, 203'. Raw material is released from the one or more material outputs described above and enters the nexus or convergence of the one or more laser outputs, where at least a portion of the provided material/feedstock is melted to form a melt pool.

At least a portion of the melt pool is deposited layer-by-layer. That is, deposited layers 205 are formed on base tray 209. The deposited layers 205 are deposited in a predetermined pattern and cool as a modified alloy in the form of an in-process article 207. In other words, as the additive-manufacturing head advances relative to the product being formed, the melted material of the melt pool begins to cool and harden (i.e., solidify) once the material is out of the weld pool, for example, upon being deposited onto a substrate or onto layers of previously deposited melt pool material.

To assist forming layers 205 on the base tray 209, the deposition device 201 can translate along a lateral stage 211, and the base tray 209 can translate along an axial, or vertical, stage 213. The system 200 optionally comprises a fabrication chamber 215 which encloses the deposition device 201, the base tray 209, and the layers 205 as formed.

The deposition device 201 may be configured to move away from the base tray 209 and the in-process article 207, leaving a clear path for non-contact. Additionally, or alternatively, the deposition device 201 may afford a clear path to a portion of the in-process article 207 and can move relative to the in-process article 207 to sequentially expose all portions of the in-process article 207. The whole additive manufacturing system 200 is controlled by a controller 217, which is optionally a computer 219. The controller 217 coordinates the operation of the deposition device 201, and can be programmed to perform any of the manufacturing methods illustrated by to flow-charts 100, 110, 120 previously described.

Additive manufacturing devices may be available or modifiable to accomplish forming of the modified alloy in the same chamber as the deposition device. Forming of the modified alloy may occur while adding boride compound(s) to a melt pool of the base alloy matrix. Some additive manufacturing processes involve melting feed stock to add more material to the melt pool. Melting can include exposure to electron beam, plasma, electric arc, laser energy, touch flame, etc. Because the resulting modified alloys can be formed *in situ*, additive manufacturing allows for rapid fabrication of the modified alloy on an as-needed basis.

The at least one base alloy may vary. For example, the composition of the base alloy can include mixtures of microcrystalline elemental and/or prealloyed and/or partially alloyed powder that may be commercially available.

Examples of the base alloy comprise metals/metal alloys such as aluminum-based alloy, iron-based alloy, nickel-based alloy, cobalt-based alloy, titanium-based alloy, and any other alloy or combination thereof. Examples of titanium alloy powder include, but are not limited to, titanium powder designated as Ti-6Al-4V containing approximately 90 percent titanium alloyed with approximately 6 percent aluminum and approximately 4 percent vanadium. In the case of a titanium alloy selected as the base alloy, the resulting modified alloy comprises a metal matrix composite comprising a Ti-TiB metal matrix composite

The base alloy can be provided in the form of a wire, powder or liquid or a combination thereof. Base alloy wire can be provided in any size or combination of sizes without limitation. In an example, base alloy wire can be provided in up to 1/8-inch size. Powder may comprise base alloy particles. The base alloy particles can be provided in any size or combination of sizes, without limitation. For example, the raw base alloy can be in powder form comprising particles in a size of from about 10 microns to about 250 microns, such as from about 45 microns to about 105 microns, including from about 10 microns to about 45 microns. Base alloy particles provided in this size range provide for better flowability and easier melting, leading to more evenly distributed powders and more evenly distributed modified alloy chemistries. Thus, while many processing systems, such as laser or electron beam systems are configured to melt powders having particles with sizes in the range of from about 10 microns to about 250 microns, other sizes can be utilized. For example, the raw base alloy particles can be provided in sizes smaller than about 10 microns or larger than about 250 microns. However, the use of particle sizes larger than about 250 microns lead to insufficient melting, and the use of particle sizes smaller than about 10 microns can lead to difficulties in spreading and forming of powder clouds that can lead to defects and flammability issues. Accordingly, one of ordinary skill in the art would recognize that the use of base alloy particles in sizes smaller than about 10 microns or larger than about 250 microns, while possible, can require additional considerations for proper processing according to the methods described herein. The base alloy particles can be provided in any shape or combination of shapes, without limitation. For example, the raw base alloy particles may be in powder form comprising particles of spherical, sponge, flake and the like.

As described above, conventional powder metallurgy processes use TiB₂ as a boride compound in forming titanium-based metal matrix composites. Many boride compounds exist with much lower melting temperatures than TiB₂ and are less expensive than boron powder. With the goal of forming a melt pool comprising molten base alloy and molten boride compound, boride compounds having melting point temperatures that fall in a range from about 0°C to about 900°C of melting point temperatures of the base alloy may be used in the methods for forming a modified alloy such as a metal matrix composite, for example, via additive manufacturing according to the methods described herein. In an example, the at least one boride compound has a melting point temperature that is lower than a melting temperature of TiB₂. While not limited to a particular theory, it is believed that low melting point boride compounds having similar melting point temperatures as the Ti base alloys provide for high concentrations of boron in resulting Ti metal matrix composites formed via additive manufacturing, whereas conventional methods in which TiB₂ is used as the metal-containing compound results in unmelted TiB₂ deposits and, therefore, lower concentrations of boron in the resulting Ti metal matrix.

The type and chemistry of the at least one boride compound may vary. For example, the composition of the at least one boride compound can include any one or more boride compound that becomes part of a solid solution formed by heat treating of base alloy, for example, as described above with respect to forming of a melt pool according to the various methods. The at least one boride compound may represented by Formula I:

MₓB_{y} (I),

wherein M is a non-boron element, wherein B is boron, wherein x = 1 or 2, and wherein y = 1 or 2. For example, M may comprise wherein M comprises Al, Co, Cr, Fe, La, Mo, Nb, Ni, or W. Examples of boride compounds include Fe₂B, AlB₂, and CrB₂. In the case of an additive manufacturing process for forming a metal matrix composite as described herein, titanium alloy is selected as the base alloy, the at least one boride compound is represented by MₓB_{y} as in formula (I) above, the boride compound will react during forming of the melt pool. The M from formula (I) will become part of the alloy while the B from formula (I) will react to form Ti-B resulting in a Ti-TiB metal matrix composite. Accordingly the at least one boride compound may comprise an alloying element (e.g., M from formula I) that is the same as an element of the base alloy. For example, where a base alloy comprises titanium alloy Ti-6Al-4V and a boride compound comprises AlB₂, the boride compound comprises alloying element Al that is the same as element Al in the base alloy.

In an example of a modified alloy via additive manufacturing, such as a metal matrix composite formed from a base alloy and a boride compound as described herein, the boride compound comprises Fe₂B. While not intending to be limited by any theory, it is believed that use of Fe₂B as the boride compound in the fabrication of the modified alloy by additive manufacturing facilitates improved machinability as compared to the unmodified base alloy.

In an example, the boride compound comprises AlB₂. AlB₂ may be used because it has almost the exact same melting temperature as some titanium base alloys (e.g. Ti-6A1-4V). Additionally, because Al has a much lower melting point that Ti and V, it is common for Al to evaporate from the metal pool during additive manufacturing. While not intending to be limited by any theory, it is believed that use of AlB₂ in fabrication of a modified alloy by additive manufacturing, such as a metal matrix composite formed from a base alloy and a boride compound, compensates for Al loss during the additive manufacturing process.

In an example, the boride compound comprises CrB₂. While not intending to be limited by any theory, it is believed that use of CrB₂ in the fabrication of a modified alloy, by additive manufacturing, such as a metal matrix composite formed from a base alloy and a boride compound via additive manufacturing facilitates improved mechanical properties of the metal matrix composite. For example, Cr improves corrosion resistance in iron-based alloys and reduces the oxygen diffusion rate in titanium-based alloys, thereby increasing the temperature range at which the alloys may be used in various applications. In an example, when a modified alloy is formed via additive manufacturing from a base alloy comprising titanium and a boride compound comprising CrB₂, at limiting the concentration of the boride compound to under about 5 wt.% prevents or minimizes the precipitation of intermetallic that could otherwise reduce the toughness of the modified alloy.

In the examples described above, the boride compound may be provided in an amount of up to about 20%, for example from about 5% to about 15%, including from about 10% to about 12% by weight of the combined provided amounts of the boride compound and the base alloy (e.g., in a raw mixed powder feed) from which a melt pool is formed as in the above methods. While not necessarily limited to any particular amount, providing the boride compound in an amount of up to about 20% by weight of the combined provided amounts of the boride compound and the base alloy from which a melt pool is formed provides for beneficial strengthening effects to the resulting modified alloy without significantly diluting the bulk alloy chemistry comprised of the base alloy. Meanwhile, while not limited to any particular theory, it is believed that providing the boride compound in an amount of more than 20% by weight of the combined provided amounts of the boride compound and the base alloy from which a melt pool is formed could result in too much dilution of the base alloy and the forming of unwanted phases in the modified alloy.

The at least one boride compound can be provided in powder form, in wire form or both depending on the additive manufacturing system in which a metal matrix composite is formed. Boride compound wire may be provided in any size or combination of sizes without limitation. In an example, boride compound wire may be provided in up to 1/8-inch size. Powder may comprise boride compound particles. The boride compound particles may be provided in any size or combination of sizes, without limitation. For example, the raw boride compound can be in powder form comprising particles in a size of from about 10 microns to about 250 microns, such as from about 45 microns to about 105 microns, including from about 10 microns to about 45 microns. Boride compound particles provided in this size range provide for better flowability and easier melting, leading to more evenly distributed powders and more evenly distributed modified alloy chemistries. Thus, while many processing systems, such as laser or electron beam systems are configured to melt powders having particles with sizes in the range of from about 10 microns to about 250 microns, other sizes can be utilized. For example, the raw boride compound particles can be provided in sizes smaller than about 10 microns or larger than about 250 microns. However, the use of particle sizes larger than about 250 microns lead to insufficient melting, and the use of particle sizes smaller than about 10 microns can lead to difficulties in spreading and forming of powder clouds that can lead to defects and flammability issues. Accordingly, one of ordinary skill in the art would recognize that the use of boride compound particles in sizes smaller than about 10 microns or larger than about 250 microns, while possible, can require additional considerations for proper processing according to the methods described herein. The boride compound particles may be provided in any shape or combination of shapes, without limitation. For example, the boride compound particles may be in powder form comprising particles of spherical, sponge, flake and the like.

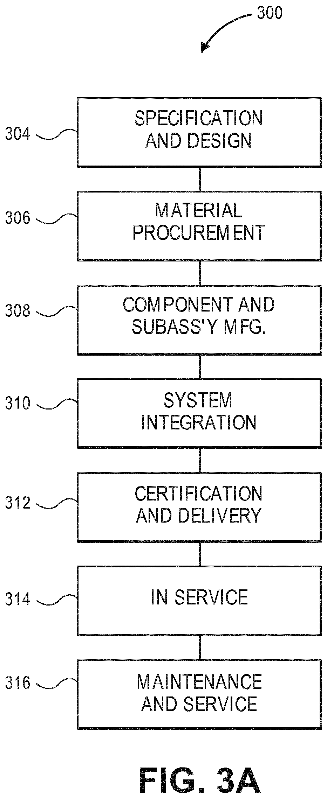

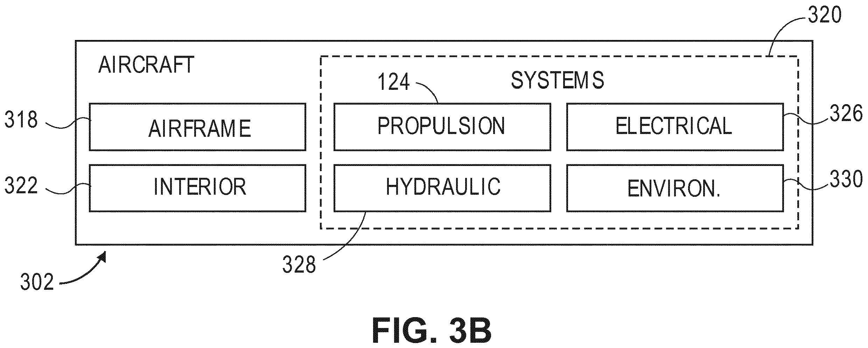

Examples of the disclosure can be described in the context of an aircraft manufacturing and service method 300 as shown in FIG. 3A and an aircraft 302 as shown in FIG. 3B. Turning to FIG 3A, during pre-production, exemplary method 300 can include specification and design 304 of the aircraft 302 and material procurement 306. During production, component and subassembly manufacturing 308 and system integration 310 of the aircraft 302 takes place. Thereafter, the aircraft 302 may go through certification and delivery 312 in order to be placed in service 314. While in service by a customer, the aircraft 302 may be scheduled for routine maintenance and service 316 (which may also include modification, reconfiguration, refurbishment, and so on).

Each of the processes of method 300 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 3B, the aircraft 302 which can be manufactured and serviced according to exemplary method 300 may include an airframe 318 with a plurality of systems 320 and an interior 322. Examples of high-level ones of systems 320 include one or more of a propulsion system 324, an electrical system 326, a hydraulic system 328, and an environmental system 330. Any number of other systems may be included. Although an aerospace example is shown, the principles of the invention may be applied to other industries, such as the automotive industry.

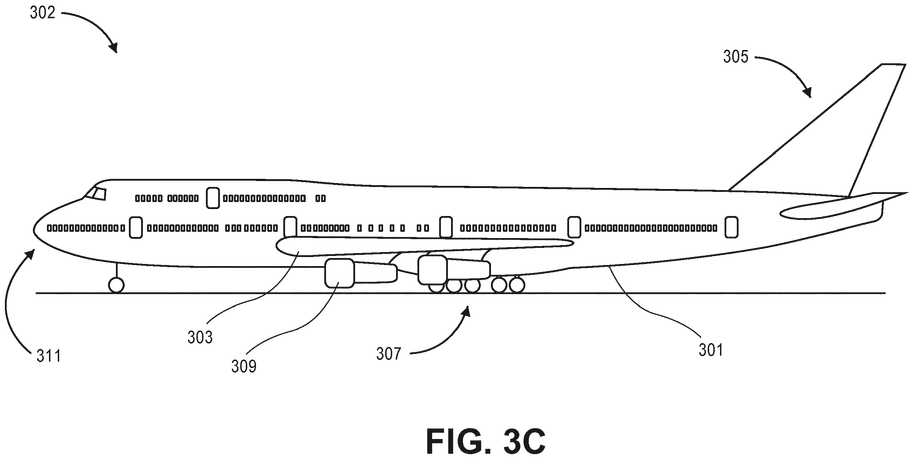

FIG. 3C is a side elevation view of an aircraft 302 comprising one or more metal matrix composite structures in accordance with another example of the disclosure. One of ordinary skill in the art will appreciate that metal matrix composites may be employed in a wide variety of components, including the fuselage, wings, empennage, body, and walls of the aircraft 302. In alternate examples, metal matrix composites may be used on other types of structures, vehicles, and platforms, such as motor vehicles, aircraft, maritime vessels, or spacecraft, or other suitable applications.

In this example, the aircraft 302 includes a fuselage 301 including wing assemblies 303, a tail assembly 305, and a landing assembly 307. The aircraft 302 further includes one or more propulsion units 309, a control system 311 (not visible), and a host of other systems and subsystems, such as those described above as high-level systems, that enable proper operation of the aircraft 302. In general, the various components and subsystems of the aircraft 302 may be of known construction and, for the sake of brevity, will not be described in detail herein.

Although the aircraft 302 shown in FIG. 3C is generally representative of a commercial passenger aircraft, including, for example, the 737, 747, 757, 767, 777, and 787 models commercially available from The Boeing Company of Chicago, Ill., the inventive metal matrix composite and methods disclosed herein may also be employed in the assembly of virtually any other types of aircraft. More specifically, the teachings of the present disclosure may be applied to the manufacture and assembly of other passenger aircraft, fighter aircraft, cargo aircraft, rotary aircraft, and any other types of manned or unmanned air vehicle.

Metal matrix composites and method(s) for forming metal matrix composites via additive manufacturing described herein may be employed during any one or more of the stages of method 300. For example, components or subassemblies corresponding to component and subassembly manufacturing 308 may be fabricated or manufactured in a manner similar to components or subassemblies produced while aircraft 302 is in service 314. Also, one or more examples of the metal matrix composites and method(s) for forming metal matrix composites via additive manufacturing, or combination thereof may be utilized during production stages (e.g., during component and subassembly manufacturing 308 and system integration 310), for example, by substantially expediting assembly of or reducing the cost of aircraft 302. Similarly, one or more examples of the metal matrix composites and method(s) for forming metal matrix composites via additive manufacturing may be utilized, for example and without limitation, while aircraft 302 is in service 314 and/or during maintenance and service 316.

Further, the disclosure comprises examples according to the following clauses:
Clause 1. A method for forming a modified alloy, comprising: providing at least one base alloy;
   providing at least one boride compound, the at least one boride represented by Formula I:

   MₓB_{y} (I),

   wherein M is a non-boron element,
   wherein B is boron,
   wherein x = 1 or 2, and
   wherein y = 1, 2, 3, 4, 5, or 6; and forming a melt pool comprising the base alloy and the at least one boride compound; and solidifying at least a portion the melt pool.
Clause 2. The method of Clause 1, wherein the at least one base alloy is provided in powder form.
Clause 3. The method of Clause 1 or 2, wherein the at least boride compound is provided in powder form.
Clause 4. The method of any one of Clauses 1-3, wherein the at least one boride compound comprises a melting temperature that is within a range of about 900°C of the melting temperature of the at least one base alloy.
Clause 5. The method of any one of Clause 1-4, wherein the at least one boride compound comprises a melting temperature that is lower than a melting temperature of TiB₂.
Clause 6. The method of any one of Clauses 1-5, wherein M comprises Al, Co, Cr, Fe, La, Mo, Nb, Ni, or W.
Clause 7. The method of any one of Clauses 1-6, wherein the at least one boride compound comprises one or more of Fe₂B, AlB₂, CrB₂, and mixtures thereof.
Clause 8. The method of any one of Clauses 1-7, wherein the at least one base alloy comprises aluminum-based alloy, iron-based alloy, nickel-based alloy, cobalt-based alloy, titanium-based alloy, or combinations thereof.
Clause 9. The method of any one of Clauses 1-8, wherein the modified alloy comprises a Ti-TiB metal matrix composite.
Clause 10. The method of any one of Clauses 1-9, further comprising combining the base alloy and the at least one boride compound prior to forming of the melt pool.
Clause 11. The method of any one of Clauses 1-10, further comprising depositing a portion of the melt pool in a predetermined pattern.
Clause 12. The method of any one of Clauses 1-11, wherein the at least one boride compound and the at least one base alloy are provided to a powder fed system.
Clause 13. The method of any one of Clauses 1-12, wherein the modified alloy comprises a functionally graded metal matrix composite.
Clause 14. The method of any one of Clauses 1-13, wherein the providing of the at least one base alloy and the providing of the at least one boride compound comprises providing a powder mixture comprising the base alloy and the at least one boride compound, and wherein the forming of the melt pool comprises laser sintering the powder mixture.
Clause 15. An article comprising a modified alloy, wherein the modified alloy is formed according to the method of any one of Clauses 1-14.
Clause 16. A powder for use in additive manufacturing, comprising: base alloy particles; and up to about 20% by weight of boride compound particles, wherein the boride compound is represented by Formula I:

   MₓB_{y} (I),

   wherein M is a non-boron element,
   wherein B is boron,
   wherein x = 1 or 2, and
   wherein y = 1, 2, 3, 4, 5, or 6.
Clause 17. The powder of Clause 16, wherein the boride compound particles comprise one or more of Fe₂B, AlB₂, CrB₂, and mixtures thereof.
Clause 18. The powder of Clause 16 or 17, wherein the at least one boride compound comprises a melting temperature that is within a range of about 900°C of the melting temperature of the at least one base alloy.
Clause 19. The powder of any one of Clauses 16-18, wherein M comprises Al, Co, Cr, Fe, La, Mo, Nb, Ni, or W.
Clause 20. The powder of any one of Clauses 16-12, wherein the at least one boride compound comprises a melting temperature that is lower than a melting temperature of TiB₂.

In the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed may be somewhat altered, as long as the alteration does not result in nonconformance of the process or structure to the illustrated examples and implementations. Finally, "exemplary" indicates the description is used as an example, rather than implying that it is an ideal.

Furthermore, to the extent that the terms "including", "includes", "having", "has", "with", or variants thereof are used in either the detailed description and the claims, such terms are intended to be inclusive in a manner similar to the term "comprising." As used herein, the phrase "one or more of', for example, A, B, and C means any of the following: either A, B, or C alone; or combinations of two, such as A and B, B and C, and A and C; or combinations of three A, B and C.

Other examples will be apparent to those skilled in the art from consideration of the specification and practice of the descriptions disclosed herein.

## Claims

1. A method for forming a modified alloy, comprising:
providing at least one base alloy;
providing at least one boride compound, the at least one boride represented by Formula I:
MₓB_{y} (I),
wherein M is a non-boron element,
wherein B is boron,
wherein x = 1 or 2, and
wherein y = 1, 2, 3, 4, 5, or 6; and
forming a melt pool comprising the base alloy and the at least one boride compound; and
solidifying at least a portion the melt pool.

2. The method of claim 1, wherein the at least one base alloy is provided in powder form, the at least boride compound is provided in powder form, or both the at least one base alloy and the at least one boride compound are provided in powder form.

3. The method of claim 1 or 2, wherein the at least one boride compound comprises a melting temperature that is within a range of about 900°C of the melting temperature of the at least one base alloy.

4. The method of any one of claims 1-3, wherein the at least one boride compound comprises a melting temperature that is lower than a melting temperature of TiB₂.

5. The method of any one of claims 1-4, wherein M comprises Al, Co, Cr, Fe, La, Mo, Nb, Ni, or W.

6. The method of any one of claims 1-5, wherein the at least one boride compound comprises one or more of Fe₂B, AlB₂, CrB₂, and mixtures thereof.

7. The method of any one of claims 1-6, wherein the at least one base alloy comprises aluminum-based alloy, iron-based alloy, nickel-based alloy, cobalt-based alloy, titanium-based alloy, or combinations thereof.

8. The method of any one of claims 1-7, wherein the modified alloy comprises a Ti-TiB metal matrix composite.

9. The method of any one of claims 1-8, further comprising combining the base alloy and the at least one boride compound prior to forming of the melt pool, further comprising preferably depositing a portion of the melt pool in a predetermined pattern.

10. The method of any one of claims 1-9, wherein the modified alloy comprises a functionally graded metal matrix composite.

11. The method of any one of claims 1-10, wherein the providing of the at least one base alloy and the providing of the at least one boride compound comprises providing a powder mixture comprising the base alloy and the at least one boride compound, and wherein the forming of the melt pool comprises laser sintering the powder mixture.

12. An article comprising a modified alloy, wherein the modified alloy is formed according to the method of any one of claims 1-11.

13. A powder for use in additive manufacturing, comprising:
base alloy particles; and
up to about 20% by weight of boride compound particles, wherein the boride compound is represented by Formula I:
MₓB_{y} (I),
wherein M is a non-boron element, wherein M preferably comprises Al, Co, Cr, Fe, La, Mo, Nb, Ni, or W
wherein B is boron,
wherein x = 1 or 2, and
wherein y = 1, 2, 3, 4, 5, or 6.

14. The powder of claim 13, wherein the boride compound particles comprise one or more of Fe₂B, AlB₂, CrB₂, and mixtures thereof.

15. The powder of claim 13 or 14, wherein the at least one boride compound particles comprises a melting temperature that is within a range of about 900°C of the melting temperature of the at least one base alloy, wherein the boride compound particles preferably comprises a melting temperature that is lower than a melting temperature of TiB₂.
